# FASCICULE DE BREVET EUROPEEN

(11) **EP 0 831 281 B1**
(45) Date de publication et mention de la délivrance du brevet: **27.09.2000**
(21) Numéro de dépôt: 97401966.3
(22) Date de dépôt: 21.08.1997
(51) Int. Cl.: F24H 1/41, F24H 8/00, F28D 7/08

(54) **Echangeur de chaleur gaz-liquide, et appareil de production d'eau chaude comprenant un tel échangeur de chaleur**
Gas/ - Flüssigkeitswärmetauscher und Wassererhitzer mit einem derartigen Wärmetauscher
Gas-liquid heat exchanger,and water heater having such a heat exchanger

(30) Priorité: 18.09.1996 FR 9611372
(43) Date de publication de la demande: 25.03.1998
(73) Titulaire: CHAFFOTEAUX ET MAURY, 78400 Chatou (FR)
(72) Inventeur: Quere, Albert, 22000 Saint Brieuc (FR); Le Provost, Fiacre, 22170 Lanrodec (FR)
(74) Mandataire: Burbaud, Eric

(56) Documents cités:
- EP-A- 0 350 388
- DE-A- 1 940 585
- FR-A- 581 136
- GB-A- 2 114 275

## Description

La présente invention est relative aux échangeurs de chaleur gaz-liquide, et aux appareils de production d'eau chaude comprenant de tels échangeurs.

Plus particulièrement, l'invention concerne les échangeurs de chaleur gaz-liquide comportant : un conduit de gaz s'étendant selon une direction longitudinale, et un circuit de liquide comprenant lui-même :
- des premier et deuxième collecteurs métalliques,
- une pluralité de tubes métalliques qui relient entre eux les deux collecteurs et qui s'étendent à l'intérieur du conduit de gaz,
- ainsi qu'une entrée et une sortie de liquide raccordées de façon que les tubes et les collecteurs soient parcourus par un flux de liquide.

Un tel échangeur de chaleur est divulgué dans le document EP-A-0 350 388.

Cet échangeur de chaleur connu donne toute satisfaction, mais présente toutefois l'inconvénient d'avoir un encombrement relativement important, dans la mesure où le circuit d'eau est disposé annulairement autour du conduit de gaz.

La présente invention a donc notamment pour but de proposer un échangeur de chaleur gaz-liquide qui présente une grande compacité tout en permettant un excellent transfert thermique entre le gaz et le liquide, et ce à un coût de revient relativement faible.

A cet effet, selon l'invention, un échangeur de chaleur gaz-liquide du genre en question est essentiellement caractérisé :
- en ce que chaque tube du circuit de liquide présente la forme d'un serpentin compris dans un plan parallèle à la direction longitudinale du conduit de gaz, ce serpentin présentant un nombre impair n, au moins égal à 3, de tronçons rectilignes reliés entre eux par un nombre pair n-1 de coudes alternés, chaque tube présentant, d'une part, un premier tronçon rectiligne d'extrémité qui est soudé au premier collecteur au moyen d'un cordon de soudure, et d'autre part, un deuxième tronçon rectiligne d'extrémité qui est soudé au deuxième collecteur au moyen d'un cordon de soudure, les plans des différents serpentins étant tous parallèles les uns aux autres et les deux collecteurs étant compris dans deux plans parallèles à la direction longitudinale du conduit de gaz mais perpendiculaires aux plans des différents tubes,
- en ce que le circuit de liquide comprend un nombre n de nappes de tubes qui sont constituées chacune de tronçons rectilignes juxtaposés appartenant aux différents tubes et qui s'étendent chacune selon un plan sensiblement perpendiculaire à la direction longitudinale du conduit de gaz, ces différentes nappes comprenant une nappe d'amont et une nappe d'aval qui sont constituées chacune de premiers et deuxièmes tronçons d'extrémité alternés, de façon que deux tronçons d'extrémité adjacents appartenant à la même nappe ne soient pas soudés au même collecteur,
- et en ce qu'au sein de chacune des nappes d'amont et d'aval, deux tronçons d'extrémité reliés au même collecteur sont séparés par une distance supérieure à 3 mm au voisinage immédiat de ce collecteur, tandis qu'au sein de chaque nappe, les tronçons rectilignes appartenant à deux tubes adjacents sont séparés l'un de l'autre par une distance comprise entre 1 et 1,5 mm.

Grâce à ces dispositions, les tronçons rectilignes des tubes délimitent entre eux des fentes étroites de passage de gaz qui permettent un excellent transfert thermique entre le gaz et le liquide, et ce transfert est d'autant meilleur que le gaz rencontre successivement plusieurs nappes de tubes au sein de l'échangeur de chaleur.

Par ailleurs, grâce à la disposition particulière des tubes, les extrémités de ces tubes sont suffisamment écartées les unes des autres, au niveau de leurs raccordements aux collecteurs, pour pouvoir être soudées sur lesdits collecteurs au moyen de cordons de soudure : on évite ainsi l'emploi de techniques de raccordement plus coûteuses telles que le brasage.

Dans des modes de réalisation préférés, on peut éventuellement avoir recours en outre à l'une et/ou à l'autre des dispositions suivantes :
- n est égal à 3 ou 5.
- chaque tube présente une section oblongue aplatie parallèlement au plan dudit tube, au moins en dehors des coudes de ce tube et des zones du tube situées au voisinage des soudures raccordant ce tube aux deux collecteurs,
- chaque tube présente un périmètre sensiblement constant, chaque tronçon d'extrémité de chaque tube présentant une section sensiblement circulaire au voisinage immédiat du collecteur auquel il est raccordé, en formant ainsi une zone de raccord élargie perpendiculairement au plan du tube correspondant, cette zone de raccord étant disposée en correspondance avec des espaces laissés libres par le ou les tubes immédiatement adjacents, de façon à ne pas interférer avec ce ou ces tubes,
- chaque tube présente un périmètre sensiblement constant, et chaque coude du tube présente une zone de section sensiblement circulaire en formant ainsi un élargissement perpendiculairement au plan du tube, cet élargissement étant disposé dans un espace laissé libre entre les différentes nappes de tubes, de façon à ne pas interférer avec le ou les tubes immédiatement adjacents,
- les deux collecteurs présentent la forme de flasques en tôle qui délimitent au moins partiellement le conduit de gaz,
- chaque collecteur présente au moins une première paroi de tôle qui délimite partiellement le conduit de gaz et au moins une deuxième paroi de tôle qui est assemblée de façon étanche à la première paroi en définissant ainsi un volume intérieur qui communique avec au moins certains des tubes, chacun de ces tubes traversant la première paroi et étant soudé à cette première paroi du côté dudit volume intérieur,
- les tubes du circuit de liquide sont répartis en des premier et deuxième groupes de tubes, le premier collecteur formant trois compartiments étanches, savoir :
   . un premier compartiment qui est relié à l'entrée de liquide ainsi qu'aux premiers tronçons d'extrémité qui appartiennent aux tubes du premier groupe et qui sont compris dans l'une des nappes d'amont et d'aval, dite première nappe,
   . un deuxième compartiment qui est raccordé à l'ensemble des premiers tronçons d'extrémité qui sont compris dans l'autre des nappes d'amont et d'aval, dite deuxième nappe,
   . et un troisième compartiment qui communique avec la sortie de liquide ainsi qu'avec les premiers tronçons d'extrémité qui appartiennent au deuxième groupe de tubes et qui sont compris dans la première nappe,
   et le deuxième collecteur comportant deux compartiments étanches, savoir :
   . un quatrième compartiment qui communique avec l'ensemble des deuxièmes tronçons d'extrémité des tubes du premier groupe,
   . et un cinquième compartiment qui communique avec l'ensemble des deuxièmes tronçons d'extrémité des tubes du deuxième groupe.

Par ailleurs, l'invention a également pour objet un appareil de production d'eau chaude comprenant, d'une part, un échangeur de chaleur tel que défini ci-dessus et d'autre part, un brûleur qui est alimenté en gaz combustible et en air comburant et qui envoie des gaz de combustion chauds dans le conduit de gaz de l'échangeur de chaleur, le circuit de liquide de cet échangeur étant un circuit d'eau.

Avantageusement, le brûleur peut être conçu de façon à produire des flammes dirigées vers le bas, le conduit de gaz de l'échangeur de chaleur s'étendant verticalement sous le brûleur, et l'appareil de production d'eau chaude constituant une chaudière à condensation adaptée pour condenser de la vapeur d'eau sur les tubes de l'échangeur de chaleur.

D'autres caractéristiques et avantages de l'invention apparaîtront au cours de la description détaillée suivante d'une de ses formes de réalisation, donnée à titre d'exemple non limitatif, en regard des dessins joints.

Sur les dessins :
- la figure 1 est une vue schématique d'ensemble d'un appareil de production d'eau chaude selon une forme de réalisation de l'invention, doté d'un échangeur de chaleur gaz-liquide tel que défini ci-dessus,
- la figure 2 est une vue écorchée en perspective de l'échangeur de chaleur appartenant à l'appareil de production d'eau chaude de la figure 1,
- la figure 3 est une vue de côté de l'échangeur de chaleur de la figure 2,
- et la figure 4 est une vue de dessus de l'échangeur de chaleur de la figure 2.

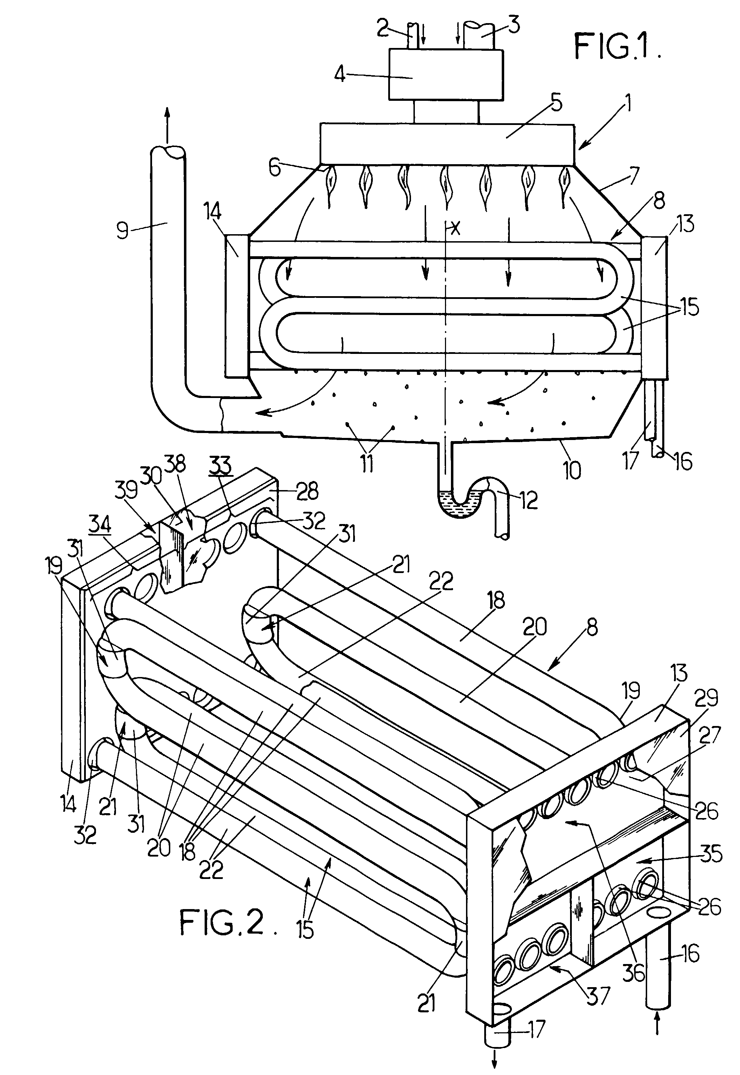

L'invention s'applique principalement, mais non exclusivement, à une chaudière à gaz 1 à condensation telle que celle représentée sur la figure 1.

Cette chaudière à gaz comporte :
- une entrée 2 de gaz combustible sous pression,
- une entrée 3 d'air,
- un ventilateur 4 qui mélange l'air et le gaz combustible provenant des entrées 2 et 3 et qui produit un mélange air-gaz combustible sous pression,
- un brûleur 5 qui reçoit le mélange air-gaz combustible du ventilateur 4 et qui présente une grille de combustion inférieure 6 conçue de façon à produire des flammes dirigées vers le bas,
- un conduit de gaz de combustion 7 qui est raccordé au brûleur 5 et est disposé sous ce brûleur, le conduit de gaz 7 s'étendant selon une direction verticale X, dite longitudinale, qui correspond à la direction moyenne d'écoulement des gaz chauds en sortie du brûleur 5, et une partie du conduit 7 appartenant à un échangeur de chaleur 8,
- un conduit d'évacuation de gaz 9, raccordé en partie inférieure du conduit 7,
- un bac 10, raccordé sous le conduit 7 pour collecter les gouttelettes d'eau 11 qui se forment par condensation de vapeur au niveau de l'échangeur de chaleur 8,
- et un siphon d'évacuation 12 raccordé au bac 10.

Comme on peut le voir plus en détail sur les figures 2 à 4, l'échangeur de chaleur 8 comprend un circuit de liquide qui comporte lui-même :
- des premier et deuxième collecteurs métalliques 13, 14 qui sont constitués par deux flasques de tôle disposés en regard l'un de l'autre de façon à délimiter partiellement le conduit de gaz 7, et qui s'étendent selon deux plans verticaux parallèles,
- une pluralité de tubes métalliques 15, de préférence dépourvus d'ailettes, qui relient entre eux les deux collecteurs 13, 14 et qui s'étendent l'intérieur du conduit de gaz 7, seuls certains des tubes 15 étant représentés sur la figure 2, pour plus de clarté,
- une entrée d'eau 16 reliée au premier collecteur 13,
- et une sortie d'eau 17 également reliée au premier collecteur 13.

Les tubes 15 se présentent sous la forme de serpentins compris dans des plans parallèles les uns aux autres et perpendiculaires aux plans des collecteurs 13, 14.

Chaque serpentin présente sensiblement la forme d'un S comprenant :
- un tronçon rectiligne d'amont 18 (les notions d'amont et d'aval s'entendent par rapport à l'écoulement des gaz de combustion dans le conduit 7) qui est disposé perpendiculairement aux plans des collecteurs 13, 14 et qui présente, d'une part, une première extrémité raccordée par soudure à l'un des deux collecteurs 13, 14, et d'autre part, une deuxième extrémité raccordée à un premier coude vertical 19 à 180° situé au voisinage de l'autre des deux collecteurs 13, 14,
- un tronçon rectiligne intermédiaire 20 qui est parallèle au tronçon 18 susmentionné et qui présente d'une part une première extrémité raccordée au premier coude 19, et d'autre part, une deuxième extrémité raccordée à un deuxième coude vertical 21 à 180° situé au voisinage du collecteur auquel est raccordé le tronçon 18,
- et un tronçon rectiligne d'aval 22 qui est parallèle aux tronçons 18, 20, et qui présente, d'une part, une première extrémité raccordée audit deuxième coude 21, et d'autre part, une deuxième extrémité raccordée audit autre collecteur.

De façon plus générale, le nombre n de tronçons rectilignes de chaque tube 15 peut être un nombre impair quelconque supérieur ou égal à 3, et de préférence égal à 3 ou 5, ces tronçons rectilignes étant reliés deux à deux par un nombre n-1 de coudes alternés.

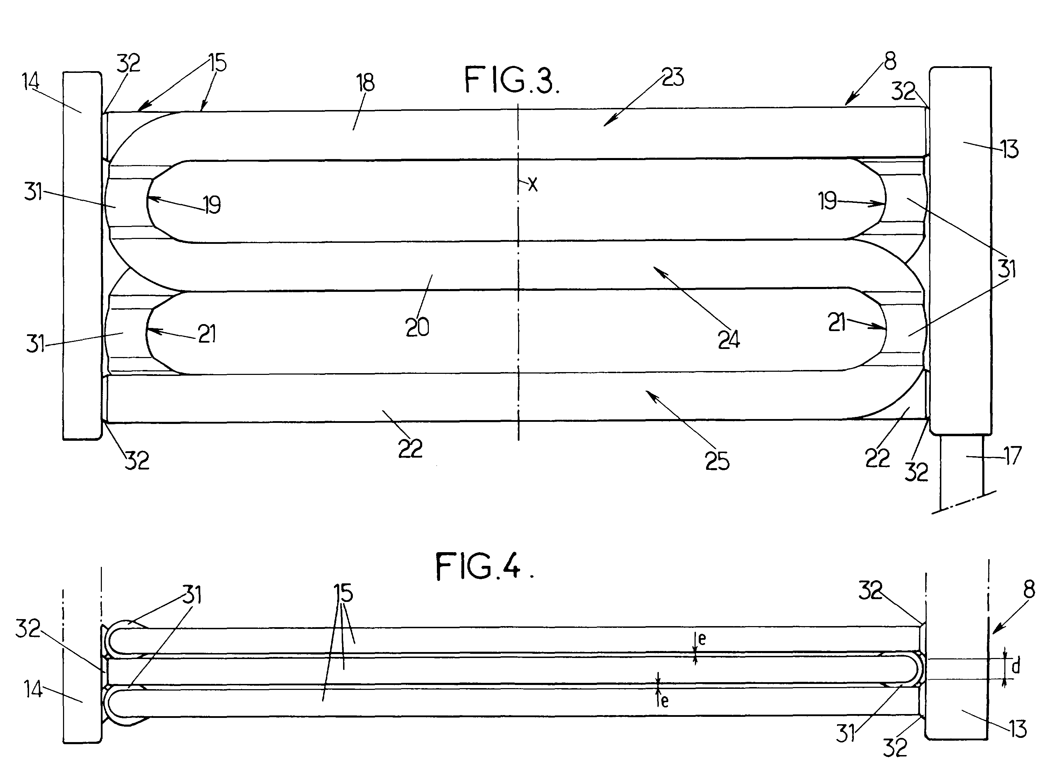

Les tronçons rectilignes des différents tubes 15 sont disposés en correspondance d'un tube à l'autre, de façon à former un nombre n de nappes de tubes horizontales 23, 24, 25 (figure 3).

Dans l'exemple considéré ici, ces nappes de tubes sont au nombre de 3, soit une nappe d'amont 23, une nappe intermédiaire 24 et une nappe d'aval 25.

Au sein des nappes d'amont et d'aval 23, 25, les tronçons rectilignes d'amont et d'aval 18, 22 sont soudés alternativement au premier et au deuxième collecteurs 13, 14, de façon que deux tronçons rectilignes adjacents ne soient jamais soudés au même collecteur.

Grâce à ces dispositions, au sein de chacune des nappes d'amont et d'aval 23, 25, deux tronçons de tube reliés au même collecteur sont séparés par une distance d supérieure à 3 mm et de préférence supérieure à 4 mm au voisinage immédiat de ce collecteur, tandis qu'au sein de chaque nappe les tronçons rectilignes adjacents sont séparés les uns des autres par une distance e comprise entre 1 et 1,5 mm, et de préférence de l'ordre de 1,3 mm (figure 4).

Ainsi, les tubes 15 délimitent entre eux des fentes très étroites pour le passage des gaz de combustion, ce qui favorise les échanges thermiques entre ces gaz de combustion chauds et le circuit d'eau et, par ailleurs, les extrémités des tubes se raccordent aux collecteurs 13, 14 en laissant entre les raccords des espaces suffisants pour permettre de souder dans de bonnes conditions lesdites extrémités de tubes aux collecteurs 13, 14, en réalisant des cordons de soudure 26 obtenus classiquement par apport de métal en fusion ou encore par fusion des métaux des tubes 15 et des collecteurs 13, 14 au moyen d'une torche à plasma sous atmosphère contrôlée.

De préférence, les soudures en question sont réalisées à l'intérieur des deux collecteurs 13, 14, qui présentent chacun la forme d'un caisson parallélépipèdique comportant deux parois principales de tôle, savoir d'une part, une paroi dite avant (monobloc ou non), respectivement 27, 28, qui délimite partiellement le conduit de gaz 7, et d'autre part, une paroi dite arrière (monobloc ou non), respectivement 29, 30.

Les parois arrière sont rapportées sur les caissons constituant les deux collecteurs, après soudure des extrémités des tubes 15 du côté arrière des parois 27, 28 : de cette façon, cette soudure est réalisée dans de bonnes conditions d'accessibilité.

Par ailleurs, dans l'exemple représenté sur les dessins, les tubes 15 présentent initialement une section circulaire sur toute leur longueur, puis sont partiellement aplatis parallèlement à leur plan, de façon à présenter une section oblongue dans leurs tronçons rectilignes.

Ainsi, les tronçons rectilignes des tubes 15 délimitent entre eux des fentes de passage de gaz qui présentent une relativement grande longueur dans le sens vertical, c'est-à-dire dans le sens de l'écoulement des gaz, ce qui facilite les transferts thermiques des gaz vers l'eau circulant dans les tubes.

De plus, cette disposition permet également d'améliorer la compacité de l'échangeur de chaleur 8.

Eventuellement, pour faciliter la fabrication de l'échangeur de chaleur 8, et optimiser à la fois son coût et sa fiabilité, les tubes 15 ne sont pas aplatis :
- dans la partie centrale 31 de chacun de leurs coudes 19, 21, c'est-à-dire entre deux nappes de tubes, chaque partie centrale 31 formant ainsi un élargissement perpendiculairement au plan du tube correspondant,
- et dans les zones 32 de raccord situées au voisinage immédiat des collecteurs 13, 14 et soudées auxdits collecteurs, chaque zone de raccord 32 formant ainsi un rétrécissement dans la direction verticale et un élargissement dans la direction perpendiculaire au plan du tube correspondant, lequel élargissement est disposé en correspondance avec des espaces laissés libres par les tubes 15 immédiatement adjacents, de façon à ne pas interférer avec ces tubes.

Dans certains modes de réalisation, il peut toutefois être préférable que les tubes soient aplatis également dans leurs zones 32 de raccord, pour laisser plus d'espace entre deux raccords 32 voisins soudés au même collecteur.

Enfin dans l'exemple particulier représenté sur les dessins, les tubes 15 sont répartis en deux groupes de tubes 33, 34 juxtaposés qui sont raccordés en série par l'intermédiaire des collecteurs 13, 14 (figure 2).

A cet effet, le premier collecteur 13 forme trois compartiments étanches, savoir :
- un premier compartiment 35 qui est relié à l'entrée d'eau 16 ainsi qu'à la moitié des tronçons rectilignes d'aval 22 des tubes du premier groupe 33,
- un deuxième compartiment 36 qui est relié à la moitié des tronçons rectilignes d'amont 18 des tubes des premier et deuxième groupes 33, 34,
- et un troisième compartiment 37 qui communique avec la sortie de liquide 17 ainsi qu'avec la moitié des tronçons rectilignes d'aval 22 des tubes du deuxième groupe 34.

Par ailleurs, le deuxième collecteur 14 comporte deux compartiments étanches, savoir :
- un quatrième compartiment 38 qui communique avec l'ensemble des tubes du premier groupe 33,
- et un cinquième compartiment 39 qui communique avec l'ensemble des tubes du deuxième groupe 34.

Comme il va de soi, ce mode particulier de connexion des différents éléments constitutifs du circuit d'eau n'est pas obligatoire, pourvu que ce circuit procure un écoulement d'eau dans l'ensemble des tubes 15 entre l'entrée d'eau 16 et la sortie d'eau 17.

Par ailleurs, comme il résulte déjà de ce qui précède, l'échangeur de chaleur 8 pourrait être utilisé dans un cadre autre que la chaudière à condensation 1.

On notera en particulier que la direction X dite longitudinale, pourrait ne pas être verticale : les termes tels que "verticale", "horizontale", ou similaires, employés dans la description qui précède ne sont donc pas limitatifs.

## Revendications

1. Echangeur de chaleur gaz-liquide (8), comportant un conduit de gaz (7) s'étendant selon une direction longitudinale (X) et un circuit de liquide comprenant lui-même :
- des premier et deuxième collecteurs métalliques (13, 14),
- une pluralité de tubes métalliques (15) qui relient entre eux les deux collecteurs et qui s'étendent à l'intérieur du conduit de gaz,
- ainsi qu'une entrée (16) et une sortie (17) de liquide raccordées de façon que les tubes et les collecteurs soient parcourus par un flux de liquide,
**caractérisé en ce que** chaque tube (15) du circuit de liquide présente la forme d'un serpentin compris dans un plan parallèle à la direction longitudinale (X) du conduit de gaz, ce serpentin présentant un nombre impair n, au moins égal à 3, de tronçons rectilignes (18, 20, 22) reliés entre eux par un nombre pair n-1 de coudes (19, 21) alternés, chaque tube (15) présentant, d'une part, un premier tronçon rectiligne d'extrémité (18, 22) qui est soudé au premier collecteur (13) au moyen d'un cordon de soudure (26), et d'autre part, un deuxième tronçon rectiligne d'extrémité (18, 22) qui est soudé au deuxième collecteur (14) au moyen d'un cordon de soudure (26), les plans des différents serpentins étant tous parallèles les uns aux autres et les deux collecteurs étant compris dans deux plans parallèles à la direction longitudinale (X) du conduit de gaz mais perpendiculaires aux plans des différents tubes,
**en ce que** le circuit de liquide comprend un nombre n de nappes de tubes (23-25) qui sont constituées chacune de tronçons rectilignes (18, 20, 22) juxtaposés appartenant aux différents tubes et qui s'étendent chacune selon un plan sensiblement perpendiculaire à la direction longitudinale (X) du conduit de gaz, ces différentes nappes comprenant une nappe d'amont (23) et une nappe d'aval (24) qui sont constituées chacune de premiers et deuxièmes tronçons d'extrémité alternés, de façon que deux tronçons d'extrémité (18, 22) adjacents appartenant à la même nappe (23, 25) ne soient pas soudés au même collecteur,
**et en ce qu**'au sein de chacune des nappes d'amont et d'aval (23, 25), deux tronçons d'extrémité (18, 22) reliés au même collecteur sont séparés par une distance (d) supérieure à 3 mm au voisinage immédiat de ce collecteur, tandis qu'au sein de chaque nappe (23-25), les tronçons rectilignes (18, 20, 22) appartenant à deux tubes adjacents sont séparés l'un de l'autre par une distance (e) comprise entre 1 et 1,5 mm.

2. Echangeur de chaleur selon la revendication 1, dans lequel n est égal à 3 ou 5.

3. Echangeur de chaleur selon l'une quelconque des revendications 1 et 2, dans lequel chaque tube (15) présente une section oblongue aplatie parallèlement au plan dudit tube, au moins en dehors des coudes (19, 21) de ce tube et des zones (32) du tube situées au voisinage des soudures (26) raccordant ce tube aux deux collecteurs (13, 14).

4. Echangeur de chaleur selon la revendication 3, dans lequel chaque tube présente un périmètre sensiblement constant, chaque tronçon d'extrémité de chaque tube présentant une section sensiblement circulaire au voisinage immédiat du collecteur auquel il est raccordé, en formant ainsi une zone de raccord (32) élargie perpendiculairement au plan du tube (15) correspondant, cette zone de raccord étant disposée en correspondance avec des espaces laissés libres par le ou les tubes (15) immédiatement adjacents, de façon à ne pas interférer avec ce ou ces tubes.

5. Echangeur de chaleur selon l'une quelconque des revendications 3 et 4, dans lequel chaque tube présente un périmètre sensiblement constant, et chaque coude (19, 21) du tube présente une zone de section sensiblement circulaire en formant ainsi un élargissement (31) perpendiculairement au plan du tube, cet élargissement étant disposé dans un espace laissé libre entre les différentes nappes de tubes, de façon à ne pas interférer avec le ou les tubes immédiatement adjacents.

6. Echangeur de chaleur selon l'une quelconque des revendications précédentes, dans lequel les deux collecteurs (13, 14) présentent la forme de flasques en tôle qui délimitent au moins partiellement le conduit de gaz (7).

7. Echangeur de chaleur selon la revendication 6, dans lequel chaque collecteur (13, 14) présente au moins une première paroi de tôle (27, 28) qui délimite partiellement le conduit de gaz (7) et au moins une deuxième paroi de tôle (29, 30) qui est assemblée de façon étanche à la première paroi en définissant ainsi un volume intérieur qui communique avec au moins certains des tubes (15), chacun de ces tubes traversant la première paroi (27, 28) et étant soudé à cette première paroi du côté dudit volume intérieur.

8. Echangeur de chaleur selon l'une quelconque des revendications précédentes, dans lequel les tubes (15) du circuit de liquide sont répartis en des premier et deuxième groupes (33, 34) de tubes, le premier collecteur (13) formant trois compartiments étanches, savoir :
- un premier compartiment (35) qui est relié à l'entrée de liquide (16) ainsi qu'aux premiers tronçons d'extrémité qui appartiennent aux tubes du premier groupe (33) et qui sont compris dans l'une (23) des nappes d'amont et d'aval, dite première nappe,
- un deuxième compartiment (36) qui est raccordé à l'ensemble des premiers tronçons d'extrémité qui sont compris dans l'autre (25) des nappes d'amont et d'aval, dite deuxième nappe,
- et un troisième compartiment (37) qui communique avec la sortie de liquide (17) ainsi qu'avec les premiers tronçons d'extrémité qui appartiennent au deuxième groupe de tubes (34) et qui sont compris dans la première nappe (25),
et le deuxième collecteur (14) comportant deux compartiments étanches, savoir :
- un quatrième compartiment (38) qui communique avec l'ensemble des deuxièmes tronçons d'extrémité des tubes du premier groupe (33),
- et un cinquième compartiment (39) qui communique avec l'ensemble des deuxièmes tronçons d'extrémité des tubes du deuxième groupe (34).

9. Appareil de production d'eau chaude comprenant, d'une part, un échangeur de chaleur selon l'une quelconque des revendications précédentes et, d'autre part, un brûleur (5) qui est alimenté en gaz combustible et en air comburant et qui envoie des gaz de combustion chauds dans le conduit de gaz (7) de l'échangeur de chaleur (8), le circuit de liquide de cet échangeur étant un circuit d'eau.

10. Appareil de production d'eau chaude selon la revendication 9, dans lequel le brûleur (5) est conçu de façon à produire des flammes dirigées vers le bas, le conduit de gaz (7) de l'échangeur de chaleur s'étendant verticalement sous le brûleur, et l'appareil de production d'eau chaude constituant une chaudière à condensation adaptée pour condenser de la vapeur d'eau sur les tubes de l'échangeur de chaleur.

## Patentansprüche

1. Gas/Flüssigkeit-Wärmetauscher (8), umfassend eine Gasleitung (7), welche sich in einer Längsrichtung (X) erstreckt und einen Flüssigkeitskreislauf, welcher selbst umfasst:
- erste und zweite metallische Sammelbehälter (13, 14),
- eine Vielzahl von Metallrohren (15), welche untereinander die Sammelbehälter verbinden und welche sich in das innere der Gasleitung erstrecken,
- sowie einen Eingang (16) und einen Ausgang (17) von Flüssigkeit, die so verbunden sind, dass die Rohre und die Sammelbehälter einen Flüssigkeitsstrom führen,
dadurch gekennzeichnet, dass jedes Rohr (15) des Flüssigkeitskreislaufs die Form eines Schlangenrohrs darstellt, das in einer Ebene enthalten ist, die parallel zur Längsrichtung (X) der Gasleitung ist, wobei dieses Schlangenrohr eine ungerade Zahl n, wenigstens gleich 3, von geraden Teilstücken (18, 20, 22) zeigt, welche untereinander durch eine gerade Anzahl n-1 von alternierenden Knien (19, 21) verbunden sind, wobei jedes Rohr (15) einerseits ein erstes äußeres gerades Teilstück (18, 22) zeigt, das mit dem ersten Sammelbehälter (13) mittels einer Schweißnaht (26) verschweißt ist, und andererseits ein zweites äußeres gerades Teilstück (18, 22), das mit dem zweiten Sammelbehälter (14) mittels einer Schweißnaht (26) verschweißt ist, wobei die Ebenen der verschiedenen Schlangenrohre zueinander vollständig parallel sind und die zwei Sammelbehälter in zwei Ebenen enthalten sind, welche parallel zur Längsrichtung (X) der Gasleitung, aber senkrecht zu den Ebenen der verschiedenen Rohre sind,
dass der Flüssigkeitskreislauf eine Anzahl n von Rohrmänteln (23-25) umfasst, welche jeweils durch nebeneinander liegende gerade Teilstücke (18, 20, 22) gebildet sind und den verschiedenen Rohren zugehören und sich jeweils in einer Ebene erstrecken, welche im Wesentlichen senkrecht zur Längsrichtung (X) der Gasleitung ist, wobei diese verschiedenen Mäntel einen stromaufwärts liegenden Mantel (23) und einen stromabwärts liegenden Mantel (24) umfassen, welche jeweils aus ersten und zweiten alternierenden äußeren Teilstücken gebildet sind, so dass zwei benachbarte äußere Teilstücke (18, 22), die dem gleichen Mantel (23, 25) zugehören, nicht mit demselben Sammelbehälter verschweißt sind,
dass im Inneren eines jeden stromaufwärts und stromabwärts liegenden Mantels (23, 25) zwei mit demselben Sammelbehälter verbundene äußere Teilstücke (18, 22) durch einen Abstand (d) von größer als 3 mm in unmittelbarer Nachbarschaft dieses Sammelbehälters beabstandet sind, wohingegen im Inneren eines jeden Mantels (23 - 25) die geraden Teilstücke (18, 20, 22), die zwei benachbarten Rohren angehören, voneinander durch einen Abstand (e) getrennt sind, welcher zwischen 1 und 1,5 mm liegt.

2. Wärmetauscher nach Anspruch 1, worin n gleich 3 oder 5 ist.

3. Wärmetauscher nach einem der Ansprüche 1 und 2, worin jedes Rohr (15) einen länglichen, parallel zur Ebene des Rohres abgeflachten Abschnitt zeigt, wenigstens außerhalb der Knie (19, 21) dieser Rohre und der Zonen (32) der Rohre, die sich in Nachbarschaft zur Schweißnaht (26) befinden, die diese Rohre mit den zwei Sammelbehältern (13, 14) verbinden.

4. Wärmetauscher nach Anspruch 3, worin jedes Rohr einen im Wesentlichen konstanten Umfang zeigt, wobei jedes äußere Teilstück jedes Rohres einen im Wesentlichen kreisförmigen Abschnitt in unmittelbarer Nachbarschaft des Sammelbehälters, mit dem es verbunden ist, zeigt, wodurch so ein senkrecht zur Ebene des Rohres (15) vergrößerter Verbindungsabschnitt (32) gebildet ist, und dieser Verbindungsabschnitt in Übereinstimmung mit dem durch das oder die unmittelbar angrenzenden Rohre (15) freigelassenen Abstand angeordnet ist, um nicht mit dem oder den Rohren zu interferieren.

5. Wärmetauscher nach einem der Ansprüche 3 und 4, worin jedes Rohr einen im Wesentlichen konstanten Umfang zeigt und jedes Knie (19, 20) des Rohres eine im Wesentlichen kreisförmige Abschnittszone zeigt, wodurch so eine zur Ebene des Rohres senkrechte Vergrößerung (31) gebildet ist, und diese Vergrößerung in einem zwischen den verschiedenen Rohrmänteln freigelassenen Raum angeordnet ist, um nicht mit dem oder den unmittelbar angrenzenden Rohren zu interferieren.

6. Wärmetauscher nach einem der vorhergehenden Ansprüche, worin die zwei Sammelbehälter (13, 14) die Form von Blechflanschen zeigen, welche wenigstens teilweise die Gasleitung (7) begrenzen.

7. Wärmetauscher nach Anspruch 6, worin jeder Sammelbehälter (13, 14) wenigstens eine erste Blechwand (27, 28) zeigt, welche teilweise die Gasleitung (7) begrenzt und wenigstens eine zweite Blechwand (29, 30), welche dicht mit der ersten Wand verbunden ist, indem so ein Innenvolumen definiert wird, das mit wenigstens einigen der Rohre (15) kommuniziert, wobei jedes dieser Rohre die erste Wand (27, 28) traversiert und mit dieser ersten Wand auf der Seite des Innenvolumens verschweißt ist.

8. Wärmetauscher nach einem der vorhergehenden Ansprüche, worin die Rohre (15) des Flüssigkeitskreislaufes in erste und zweite Gruppen (33, 34) von Rohren unterteilt sind, wobei der erste Sammelbehälter (13) drei dichte Kompartimente bildet, nämlich:
- ein erstes Kompartiment (35), welches mit dem Flüssigkeitseingang (16) sowie mit ersten äußeren Teilstücken, welche den Rohren der ersten Gruppe (33) zugehören, und welche in einer (23) der stromaufwärts und stromabwärts liegenden Gruppen enthalten ist, erster Mantel genannt, verbunden ist,
- ein zweites Kompartiment (36), welches mit der Gesamtheit der ersten äußeren Teilstücke verbunden ist, welche in dem anderen (25) der stromaufwärts und stromabwärts liegenden Mäntel, genannt zweiter Mantel, enthalten sind,
- und ein drittes Kompartiment (37), das mit dem Flüssigkeitsausgang ((17) sowie den ersten äußeren Teilstücken kommuniziert, welche der zweiten Gruppe von Rohren (34) zugehören und welche in dem zweiten Mantel (25) enthalten sind,
und der zweite Sammelbehälter (14) zwei dichte Kompartimente umfasst, nämlich:
- ein viertes Kompartiment (38), das mit der Gesamtheit der zweiten äußeren Teilstücke der Rohre der ersten Gruppe (33) kommuniziert,
- und ein fünftes Kompartiment (39), das mit der Gesamtheit der zweiten äußeren Teilstücke der Rohre der zweiten Gruppe (34) kommuniziert.

9. Vorrichtung zur Erzeugung von heißem Wasser, umfassend einerseits einen Wärmetauscher nach einem der vorhergehenden Ansprüche und andererseits einen Brenner (5), welcher mit Brenngas und Verbrennungsluft gespeist wird, und welcher heißes Verbrennungsgas in die Gasleitung (7) des Wärmetauschers (8) einführt, wobei der Flüssigkeitskreislauf dieses Wärmetauschers ein Wasserkreislauf ist.

10. Vorrichtung zur Erzeugung von heißem Wasser nach Anspruch 9, worin der Brenner (5) derart ausgestaltet ist, dass er nach unten gerichtete Flammen erzeugt, wobei sich die Gasleitung (7) des Wärmetauschers senkrecht unter dem Brenner erstreckt und die Vorrichtung zur Erzeugung von heißem Wasser einen Kondensationskessel bildet, der zum Kondensieren von Wasserdampf an den Rohren des Wärmetauschers angepasst ist.

## Claims

1. Gas-liquid heat exchanger (8), comprising a gas duct (7) running in a longitudinal direction (X) and a liquid circuit, itself comprising :
- first and second metallic collectors (13, 14),
- a plurality of metal tubes (15) which connect the two collectors between them and which run across the interior of the gas duct,
- and also a liquid input (16) and output (17) connected such that the tubes and collectors carry a flow of liquid,
and having the property that each tube (15) of the circuit is in the form of a serpentine oriented in a plane parallel to the longitudinal direction (X) of the gas flow, the serpentine comprising an odd number n, greater than or equal to 3, of rectilinear segments (18, 20, 22) connected together by an even number n-1 of alternating elbows (19, 21), each tube (15) comprising, at one end, a first rectilinear segment (18, 22) which is attached to the first collector (13) by means of a welding collar (26), and at the other end. a second rectilinear segment (18, 22) which is attached to the second collector by means of a welding collar (26), the planes of the different serpentines all being parallel to each other and the two collectors being located in two planes parallel to the longitudinal direction (X) of the gas line but perpendicular to the planes of the various tubes,
and that the liquid circuit comprises a number n of tube rows (23-25) which are each composed of juxtaposed rectilinear segments (18, 20, 22) from each of the different tubes and which rows are each aligned in planes effectively perpendicular to the longitudinal direction (X) of the gas flow, the set of rows comprising one upstream row of tubes (23) and one downstream row (25) which are each composed of alternating first and second tube end segments, in such a manner that two adjacent end segments (18, 22) within the same row (23, 25) are connected to opposite collectors,
and that within each of the upstream and downstream rows (23, 25), two tube end segments fixed into the same collector are separated by a distance (d) greater than 3 mm where they are in close proximity to the collector, while within each of the rows (23-25), the rectilinear segments (18, 20, 22) belonging to two adjacent tubes are separated by a distance between 1 and 1.5 mm.

2. A heat exchanger according to claim 1, in which n is equal to 3 or 5.

3. A heat exchanger according to either of claims 1 or 2, in which each tube (15) is constituted by an oblong section or sections flattened in the direction parallel to the tube plane, at least away from the elbow segments (19, 21) of this tube and away from the tube areas (32) in proximity to the welds (26) fixing the tube to the two collectors (13, 14).

4. A heat exchanger according to claim 3, in which each tube has an approximately constant perimeter, each extremity of each tube having an essentially circular cross-section close to the collector to which it is connected, thus forming a weld area (32) which is enlarged in a plane perpendicular to the corresponding tube (15), and which area extends into the space left free by the immediately adjacent tube or tubes (15), in such a manner as not to interfere with this or these tubes.

5. A heat exchanger according to either of claims 3 or 4, in which each tube has an approximately constant perimeter, and in which each tube elbow (19, 21) has an area of essentially circular cross-section thus being enlarged (31) in a direction perpendicular to the tube plane, this enlargement being formed in an open space between the rows of tube segments, in such a manner as not to interfere with the immediately adjacent tube or tubes.

6. A heat exchanger according to any one of the above claims, in which the two collectors (13, 14) are in the form of steel-plate flanges which, at least partially, constitute the walls of the gas duct (7).

7. A heat exchanger according to claim 6, in which each collector (13, 14) is constituted by a least a first steel-plate face (27, 28) which forms a wall of the gas duct (7) and at least a second steel-plate face (29, 30) which is assembled with the first face to form a tight seal and create an interior volume which communicates with at least some of the tubes (15), each of these tube penetrating the first face (27, 28) and being welded to this first face on the inside of the said interior volume.

8. A heat exchanger according to any of the above claims, in which the liquid circuit tubes (15) are divided into first and second groups (33, 34) of tubes, the first collector (13) comprising three sealed compartments, that is :
- a first compartment (35) which is connected to the liquid input (16) and to the first end segments of the tubes belonging to the first group (33) and which are included in one (23) of the upstream and downstream rows of tubes, called the first row,
- a second compartment (36) which is connected to all of the tube end segments which form the other (25) of the upstream and downstream rows of tubes, called the second row,
- and a third compartment (37) which communicates with the liquid output (17) and is connected to the first end segments of the second group of tubes (34) which form the other part of the first row (25),
and the second collector (14) comprising two sealed compartments, that is :
- a fourth compartment (38) which communicates with all of the second end segments of the first group of tubes (33),
- and a fifth sealed compartment (39) which communicates with all of the second end segments of the second group of tubes (34).

9. A device for the production of hot water comprising, on the one hand, a heat exchanger according to any of the above claims and, on the other, a burner (5) which is supplied with a combustible gas/air mixture and which sends the hot combustion gases into the gas duct (7) of the heat exchanger (8), the liquid circuit of this heat exchanger being a water circuit.

10. A device for the production of hot water according to claim 9, in which the burner (5) is designed to produce downward directed flames, the gas duct (7) and the heat exchanger extending vertically below the burner, and the hot water production device constituting a condensation boiler designed to condense water vapour onto the heat exchanger tubes.
